(19) Europäisches Patentamt

European Patent Office

Office européen des brevets

(11) Publication number: **0 463 273 B1**

(12) EUROPEAN PATENT SPECIFICATION

(45) Date of publication of patent specification: **29.03.95** (51) Int. Cl.⁶: **B60C 9/20**

(21) Application number: **90630252.6**

(22) Date of filing: **18.12.90**

(54) **Radial ply tire.**

(30) Priority: **23.06.90 EP 90111951**

(43) Date of publication of application:
**02.01.92 Bulletin 92/01**

(45) Publication of the grant of the patent:
**29.03.95 Bulletin 95/13**

(84) Designated Contracting States:
**FR GB LU**

(56) References cited:
**EP-A- 0 250 204
EP-A- 0 335 588
EP-A- 0 360 538
EP-A- 0 396 494
US-A- 4 957 799**

(73) Proprietor: **THE GOODYEAR TIRE & RUBBER
COMPANY
1144 East Market Street
Akron, Ohio 44316-0001 (US)**

(72) Inventor: **Marquet, Michel
Hayen 14
B-4052 Sprimont (BE)**
Inventor: **Vermaat, Piet
23, Rue de Merscheid
L-9196 Mertzig (LU)**
Inventor: **Navaux, Stanley
49, Chaussée d'Arlon
B-6600 Bastogne (BE)**

(74) Representative: **Leitz, Paul
Goodyear Technical Center-Luxembourg
L-7750 Colmar-Berg (LU)**

## Description

The present invention relates to a radial tire for aircraft having a carcass comprising several plies, reinforced by substantially radially oriented parallel organic filaments, yarns or cords, the plies being folded axially around a pair of axially spaced bead cores. The tire further comprises at least one belt ply disposed radially outwardly of the carcass plies in a crown region of the tire, the belt plies also being reinforced by organic filaments, yarns or cords.

EP-A- 250 204 discloses a pneumatic tire containing between the tread and the carcass ply one or more substantially circumferential belts of parallel twisted single aramid yarns of poly(p-phenylene-terephthalamide).

EP-A- 396 494, published after the priority date of the instant application, describes a pneumatic tire suitable for use on aircraft having its carcass plies and its belt plies reinforced with nylon monofilaments.

It is generally recognized in the tire art, that tires suitable for use on aircraft must be capable of operating under conditions of very high speeds and large loads as compared to tires used on automobiles, busses, trucks or similar earthbound vehicles. As used herein and in the claims, a tire is "suitable for use on an aircraft" if the tire is of a size and load range, or ply rating, specified in either the YEARBOOK OF THE TIRE AND RIM ASSOCIATION, or the YEARBOOK OF THE EUROPEAN TYRE AND RIM TECHNICAL ORGANIZATION, for the year in which the tire is manufactured, or in the current U.S.A. military specification "MIL-T-5041".

It is an object of the present invention to provide a radial pneumatic tire, having a low-weight carcass with excellent dimensional stability.

It is a further object of the invention to create a radial tire having outstanding belt strength.

These objects are met by the invention as outlined in the appended claims.

To acquaint persons skilled in the art with the principles of the invention, certain presently preferred embodiments illustrative of the best mode now contemplated for the practice of the invention are described herein making reference to the attached drawings forming a part of the specification and in which drawings:

Fig. 1 is a cross-sectional view of a tire according to a first embodiment of the invention taken in a plane that contains the axis of rotation of the tire;

Fig. 2 is a cross-sectional view of a tire according to a second embodiment of the invention taken in a plane that contains the axis of rotation of the tire; and

Fig. 3 is an enlarged fragmentary view of a belt of a tire according to a further embodiment of the invention.

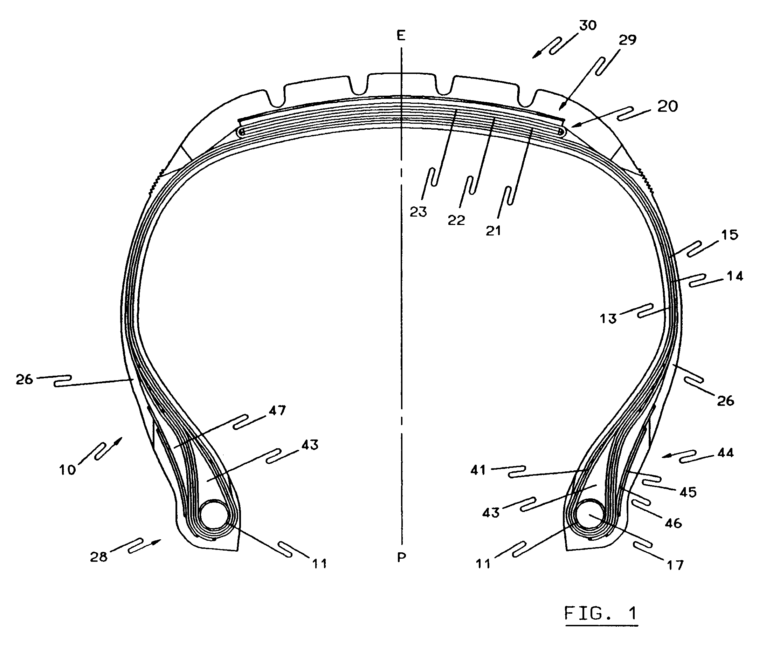

With reference to Fig. 1, an aircraft tire 10 of size 32 x 8.8 R 16 has a pair of substantially inextensible annular bead cores 11, 12 which are axially spaced apart with several carcass plies 13, 14, 15 extending between the bead cores.

As used herein and in the claims, the terms "axial" and "axially" refer to directions which are parallel to the axis of rotation of a tire and the terms "radial" and "radially" refer to directions that are radially toward or away from to the axis of rotation of a tire. Each of the carcass plies 13 to 15 comprises a plurality of reinforcing elements oriented at 75° to 90°, preferably 80° to 89°, with respect to an equatorial plane (EP) of the tire. The "equatorial plane" of a tire is a plane that is perpendicular to the axis of rotation of the tire and passes through the center of the tire tread and an "axial plane" is a plane that contains the axis of rotation of the tire.

The carcass plies comprise two turn-up carcass plies 13, 14 and one turn-down carcass ply 15. Each of the turn-up carcass plies 13, 14 is folded axially and radially outwardly about each of the bead cores 11 and the turn-down carcass ply 15, is folded at least partially radially and axially inwardly about each of the bead cores 11 and the turn-up carcass plies 13, 14. The turn-down carcass ply 15 is folded around the bead cores to such a degree that the respective edge of said turn-down plies are located axially inwardly of the axial midpoints 17 of the respective bead cores 11.

Tires have been manufactured in which the reinforcing elements of the radially innermost turn-up carcass plies 13 were oriented at 82° with respect to the equatorial plane EP, the reinforcing elements of the second turn-up carcass ply 14 were oriented at 85° with respect to the equatorial plane EP, and the reinforcing elements of the turn-down carcass ply 15 were oriented at 88° with respect to the equatorial plane EP. It is, understood that in preferred embodiments of the invention the orientation of the reinforcing elements in each carcass ply, or pair of carcass plies, should be nearer to 90° than the orientation of the reinforcing elements of the radially next innermost ply, or pair of carcass plies, and the included angles between the angles of radially adjacent carcass plies should not be greater than 10°, and preferably not greater than 4°. For details about the best choice of ply angles, reference is hereby made to commonly owned US patent No. 4,823,103.

If the tire is of the tubeless variety, a substantially air impervious layer (not represented) is disposed radially inwardly of all of the carcass plies.

The reinforcing elements of all of the carcass plies 13 to 15 can be substantially the same and each comprises a monofilament of 4400 dtex (4,000 denier) nylon. A monofilament is by definition a cord consisting of one filament. The monofilaments can either have a round section or can be slightly flattened with a substantially oval section or strongly flattened with rounded off edges. Such flattened filaments for a given required strength offer a gauge advantage and have a lower rivet area for a given fabric density than filaments with conventional circular cross-section. The fabric densities (expressed in EPM i,e. ends per meter or in EPI, i. e. ends per inch) as well as the linear densities used in the instant disclosure are those of reinforcing elements in plies which have not yet been submitted to any shaping. Preferably, the nylon monofilaments should have their greatest linear cross-sectional extent, i.e. their width, two to five times the linear cross-sectional extent perpendicular to said width, i.e. their thickness. The monofilaments in each ply are preferably disposed with a minimum density of 550 EPM (14 EPI), preferably of about 710 EPM (18 EPI), in order to yield the desired mechanical characteristics of the tire carcass. Nylon monofilaments have a tenacity of at least 6,3 cN/dtex (7 cN/denier), a modulus of at least 36 cN/dtex (40 cN/denier), an elongation at break of at least 18 % and a shrinkage of at most 4 %. Further details about monofilaments can be found in EP-A-396 494.

A belt 20 is located outwardly of the carcass plies 13-15 in a crown region of the tire 10. A ground engaging tread portion 30 is disposed radially outwardly of the belt structure 20, and a sidewall portion 26 extends radially inwardly from each axial edge of the tread portion to a respective bead portion 28.

Each of the belt plies 21-23 comprises parallel high twist aramid cords oriented at 10° to 40° with respect to the equatorial plane EP of the tire and has a fabric density comprised between 390 and 1380 EPM (10 and 35 EPI). As used herein, "aramid" and "aromatic polyamide" are both understood to mean a manufactured fiber in which the fiber forming substance is generally recognized as a long chain synthetic aromatic polyamide in which at least 85% of the amide linkages are attached directly to the two aromatic rings. Representative of an aramid or aromatic polyamide is a poly (p-phenyleneterephtalamide). "High twist" aramid cords to be used in one embodiment of the invention as reinforcing elements in a tread reinforcing structure of a tire have a twist multiplier (TM) in the range of 7 to 9; the twist multiplier being defined as:

$$TM = 0.0137 \times CT \times \sqrt{CD}$$

wherein

CT is the number of turns per inch (2,54 cm) of cord length; and

CD is the sum of the deniers of the yarns and/or subgroups of the yarns of the cord before any twist is imparted to the yarns or subgroup.

"Low twist" aramid cords to be used in another embodiment of the invention as reinforcing elements of the belt of a tire, where strength is of lesser importance, have a twist multiplier in the range of 4 to 7. It is believed that belt plies reinforced with high twist aramid cords lead to tires with an optimized carcass-belt compatibility and a better durability whereas belt plies reinforced with low twist aramid cords optimize the landing capacity of aircraft tires. Details about high and low twist aramid cords can be found in commonly owned US-A-4,832,102.

The belt 20 comprises one belt ply 21 folded around two plies 22, 23. The folded ply is reinforced with high twist 1670/3 dtex (1,500/3 denier) aramid, having a fabric density of about 550 EPM (14 EPI) and forming with the equatorial plane of the tire an angle comprised between 18° and 26°. The plies 22, 23 are also reinforced with 1670/3 dtex (1,500/3 denier) high twist aramid cords, having a fabric density of about 710 EPM (18 EPI). The angles formed by the reinforcement cords of the two plies with the equatorial plane of the tire are opposed and range between 12° and 24° and preferably between 16° and 20°.

Between the ground engaging tread portion 30 and the belt structure 20 is disposed at least one overlay ply 29 reinforced by 940/2 dtex (840/2 denier) nylon cords. The nylon cords have a fabric density of about 870 EPM (22 EPI) and are parallel to each other in each ply. It is believed that overlay plies only make a minor contribution to the properties and high-speed performance of the tire; their main function is to protect the belt 20 during retreading operations, where they act as a visual warning layer when the elastomeric material constituting the tire tread is buffed away.

The disposition of reinforcing strips in the bead portions of tires is believed to contribute to the product performance, especially to its durability. Furthermore, the reinforcing strips folded around the bead cores compensate for the restriction of the ply ends during the shaping of the tire. In the embodiment shown on Fig. 1, one strip 41 reinforced by 940/2 dtex (840/2 denier) nylon cords has at least a portion interposed between the radially innermost turn-up carcass ply 13 and the neighboring turn-up carcass ply 14. It is preferred that the reinforcing strip 41 extends in part around the radially innermost side of the apex 43 and along the radially outermost side of the apex 43 up into the sidewall. The nylon cords of the reinforcing strip 41 should be disposed at angles of 30° to 60° with respect to an axial plane intersecting the cord, preferably at angles between 40° and 50°. The apex 43 is made of rubber having a Shore A hardness of 76 to 84.

Between the radially outermost turn-down carcass ply 15 and the chafer 44, there are located two further reinforcing plies 45, 46 known in the art as semi-chipper. The semi-chippers are reinforced by nylon cords having an inclination between 20° and 70° and more preferably between 40° and 50° with respect to an axial plane passing through the cord. It is believed that the reinforcing plies 45, 46 distribute the shear and compression stresses due to the tire deflection. Between the semi-chippers 45, 46, and the turn-down carcass ply 15 a rubber gum strip 47 having a Shore A hardness of about 62 is located.

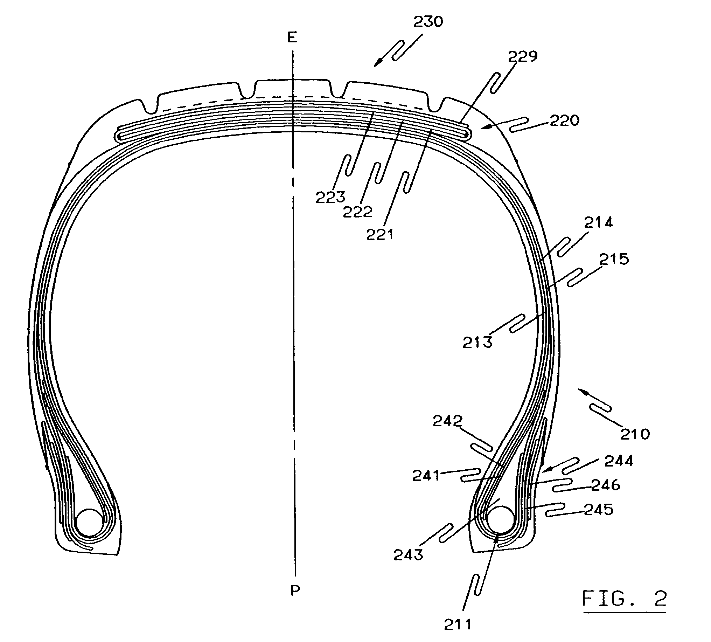

In Fig. 2 a tire 210 comprising carcass plies 213-215 reinforced with nylon monofilaments having a linear density of about 4400 dtex (4,000 denier) and a fabric density of about 710 EPM (18 EPI) is shown. The monofilaments of all the plies have a strongly flattened section with rounded off edges.

The belt 220, reinforced with low twist aramid cords, comprises a belt ply 221 folded around two plies 222, 223. The folded ply is reinforced with 1670/3 dtex (1,500/3 denier) aramid, having a fabric density of about 630 EPM (16 EPI) and forming with the equatorial plane of the tire an angle comprised between 18° and 26° and more preferably between 20° and 24°. The plies 222, 223 are reinforced with aramid cords having a linear density of about 1670/3 dtex (1,500/3 denier) and a fabric density of about 630 EPM (16 EPI). The angles formed by the reinforcement cords of the two plies 222, 223 with the equatorial plane of the tire are opposed and have values ranging between 10° and 26° and preferably between 16° and 20°.

Between the ground engaging tread portion 230 and the belt structure 220, one nylon reinforced overlay ply 229, protecting the belt 220 during retreading operations, can be distinguished.

In the bead region of the tire two strips 241, 242, reinforced by 940/2 dtex (840/2 denier) nylon cords, are interposed between the radially outermost turn-up carcass ply 214 and the apex 243. The reinforcing strips extend from the bead cores 211 at least along the whole height of the apex 243, up into the sidewall. The nylon cords of the reinforcing strips 241, 242 are disposed at angles of 30° to 60° with respect to an axial plane intersecting the cord, preferably at angles between 40° and 50°.

Between the radially outermost turn-down carcass ply 215 and the chafer 244, there are located two semi-chippers 245, 246. The semi-chippers are reinforced by nylon cords having an inclination between 50° and 70° with respect to an axial plane intersecting the cord.

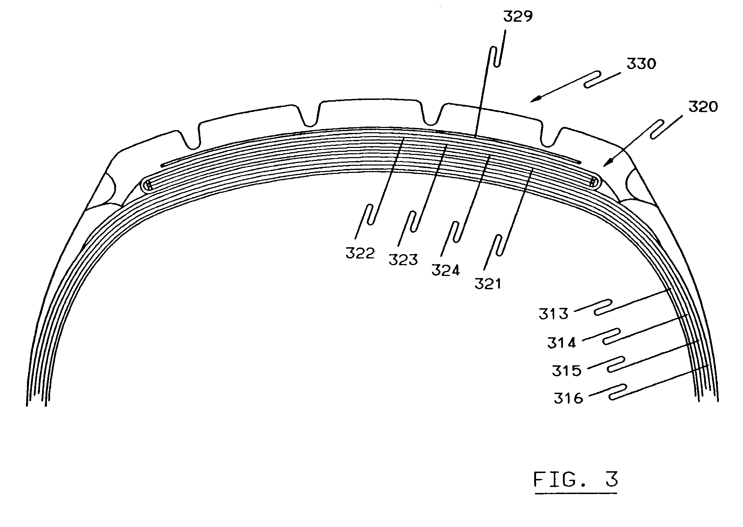

In Fig. 3 part of a tire section comprising two turn-up carcass plies 313, 314, and two turn-down carcass plies 315, 316, is represented. The carcass plies are reinforced with nylon monofilaments having a linear density of 940/2 dtex (840/2 denier) and a fabric density of 940 EPM (24 EPI). The monofilaments of all the plies have a strongly flattened section with rounded off edges.

The belt 320 is reinforced with high twist aramid cords and comprises one belt ply 321 folded around three plies 322-324. The folded ply is reinforced with 1670/3 dtex (1,500/3 denier)aramid, having a fabric density of about 550 EPM (14 EPI) and forming with the equatorial plane of the tire an angle comprised between 18° and 26°. The three plies 322-324 are reinforced with 1670/3 dtex (1,500/3 denier)aramid, having a fabric density of about 630 EPM (16 EPI). The angles formed by the reinforcement cords of the three plies with the equatorial plane of the tire are opposed between neighboring plies and range between 10° and 24°. In a preferred embodiment of the invention, the angles of the plies have the following values: about -16° for the radially innermost ply and about respectively +18° and -18° for the two radially outermost plies.

Between the ground engaging tread portion 330 and the belt structure 320 there is disposed one overlay ply 329 reinforced by nylon cords. As explained above, such an overlay ply is particularly important in retreading operations.

It is understood that the belt and carcass structures illustrated in Fig. 1, 2 and 3 and described herein, are merely examples used in preferred embodiments. A tire designer may employ different numbers of carcass plies, reinforced with nylon monofilaments having different sections and different linear and fabric densities, together with other arrangements of unfolded or folded belt plies, reinforced with high twist or low twist aramid cords, in accordance with the performance requirements of a particular tire, while still practicing the present invention, as defined in the claims.

## Claims

1. A pneumatic tire (10, 210) for aircraft having
   - at least two carcass plies (13-15, 213-215) folded at least in part axially around a pair of axially spaced apart bead cores (11,211), each carcass ply (13-15, 213-215) comprising a plurality of parallel reinforcing elements consisting of nylon monofilaments having a linear density of at least 2800 dtex (2,500 denier) and a fabric density of at least 470 EPM (12 EPI) and an oblong cross-section with their greatest linear cross-sectional extent i.e. their width, two to five times the linear cross-sectional extent perpendicular to said width, which are oriented at 75° to 90° with respect to an equatorial plane (EP) of the tire,; and
- two or more belt plies (21-23, 221-223) being disposed radially outwardly of said carcass plies (13-15, 213-215) in a crown region of the tire, wherein the reinforcing elements of the belt plies (21-23, 221-223) consist of aramid having a linear density of at least 2220 dtex (2,000 denier) and a fabric density of at least 390 EPM (10 EPI).

2. The pneumatic tire as claimed in claim 1, characterized by the aramid cords reinforcing the belt plies (21-23, 221-223), having a linear density of at least 3300 dtex (3,000 denier), a fabric density of 390 to 980 EPM (10 to 25 EPI) and forming with the equatorial plane (EP) of the tire (10, 210) an angle comprised between 10° and 35°, the angles formed by the reinforcement cords of two neighboring plies with the equatorial plane (EP) of the tire being opposed.

3. The pneumatic tire as claimed in claim 2, characterized by a belt ply (21-23, 221-223), reinforced by high twist aramid cords, having a linear density of at least 4400 dtex (4,000 denier) and a fabric density of 470 to 790 EPM (12 to 20 EPI), the reinforcement cords forming an angle comprised between 18° and 24° with the equatorial plane (EP) of the tire, folded around two plies reinforced by high twist aramid cords having a fabric density of 470 to 790 EPM (12 to 20 EPI) and forming an angle comprised between 15° and 24° with the equatorial plane of the tire.

4. The pneumatic tire as claimed in claim 2, characterized by a belt ply (21-23, 221-223), reinforced by low twist aramid cords, having a linear density of at least 4400 dtex (4,000 denier) and a fabric density of 390 to 710 EPM (10 to 18 EPI), the reinforcement cords forming an angle comprised between 18° and 26° with the equatorial plane (EP) of the tire, folded around two plies reinforced by low twist aramid cords having a fabric density of 390 to 710 EPM (10 to 18 EPI) and forming an angle comprised between 14° and 22° with the equatorial plane of the tire.

5. The pneumatic tire as claimed in claim 1, characterized in that the carcass has at least two turn-up carcass plies (13,14, 213,214) and at least one turn-down carcass ply (15, 215), each turn-up carcass ply being folded axially and radially outwardly about each bead core (11, 211) and each turn-down carcass ply being folded at least partially axially inwardly about the turn-up carcass plies and the bead core.

6. The pneumatic tire as claimed in claim 5, characterized by at least one strip (41, 241, 242) reinforced by nylon cords extending along the radially innermost side of each apex (43, 243) and the radially outermost turn-up carcass ply (14, 214).

7. The pneumatic tire as claimed in claim 6, characterized by said strips (241, 242) extending from the bead cores (211) at least along the whole height of the apex (243) up into the sidewall.

8. The pneumatic tire as claimed in claim 6, characterized by said strips (41) extending in part around the radially innermost side of the apex (43) and along the radially outermost side of the apex up into the sidewall.

9. The pneumatic tire as claimed in claim 6, characterized by the nylon cords of the reinforcing strip (41, 241) being disposed at angles of 30° to 60° with respect to an axial plane intersecting the cord.

10. The pneumatic tire as claimed in claim 5, characterized by having at least one ply (45,46, 245,246) a so-called semi-chipper, reinforced by nylon cords, disposed between the radially outermost turn-down carcass ply (15, 215) and the chafer (44, 244) of the tire.

11. The pneumatic tire as claimed in claim 10, characterized by a rubber gum strip (47) having a Shore A hardness of about 62, being located between the semi-chipper (45,46) and the turn-down carcass ply (15, 215).

12. The pneumatic tire as claimed in claim 1, characterized by the nylon monofilaments having a linear density of at least 3300 dtex (3,000 denier) and a fabric density of at least 390 EPM (10 EPI).

**Patentansprüche**

1. Luftreifen (10, 210) für Flugzeuge mit
   - mindestens zwei Karkassenlagen (13-15, 213-215), welche zumindestens teilweise axial um ein Paar von axial voneinander beabstandeten Wulstkernen (11, 211) gefaltet bzw. gelegt sind, wobei jede Karkassenlage (13-15, 213-215) eine Vielzahl von parallelen Verstärkungselementen umfaßt, welche aus Nylon-Monofilamenten bestehen, mit einer linearen Dichte von mindestens 2800 dtex (2500 denier) und einer Gewebedichte von mindestens 470 EPM (12 EPI) und einem länglichen Querschnitt, wobei ihre größte lineare Querschnittsabmessung, d.h. ihre Breite, 2 bis 5 mal die lineare Querschnittsabmessung senkrecht auf diese Breite beträgt, welche unter 75° bis 90° bezüglich einer Äquatorialebene (EP) des Reifens angeordnet sind; und
   - zwei oder mehr Gürtellagen (21-23, 221-223), welche von den Karkassenlagen (13-15, 213-215) in einem Kronenbereich des Reifens radial nach außen angeordnet sind, wobei die Verstärkungselemente der Gürtellagen (21-23, 221-223) aus Aramid mit einer linearen Dichte von mindestens 2220 dtex (2000 denier) und einer Gewebedichte von mindestens 390 EPM (Enden pro Meter, entspricht etwa 10 EPI Enden pro Inch) bestehen.

2. Luftreifen gemäß Anspruch 1, dadurch gekennzeichnet, daß die die Gürtellagen (21-23, 223) verstärkenden Aramidkorde eine lineare Dichte von zumindest 3300 dtex (3000 denier), eine Gewebedichte von 390 bis 980 EPM (10 bis 25 EPI) aufweisen und mit der Äquatorialebene (EP) des Reifens (10, 210) einen Winkel zwischen 10 und 35° bilden, wobei die durch die Verstärkungskorde von zwei benachbarten Lagen mit der Äquatorialebene (EP) des Reifens gebildeten Winkel entgegengesetzt sind.

3. Luftreifen gemäß Anspruch 2, gekennzeichnet durch eine Gürtellage (21-23, 221-223), welche durch Hoch-Twist-Aramidkorde mit einer linearen Dichte von zumindest 4400 dtex (4000 denier) und einer Gewebedichte von 470 bis 790 EPM (12 bis 20 EPI) verstärkt ist, wobei die Verstärkungskorde einen Winkel zwischen 18° und 24° mit der Äquatorialebene (EP) des Reifens bilden, um zwei Lagen gelegt ist, die durch Hoch-Twist-Aramidkorde mit einer Gewebedichte von 470 bis 790 EPM (12 bis 20 EPI) verstärkt sind und einen Winkel zwischen 15° und 24° mit der Äquatorialebene des Reifens bilden.

4. Luftreifen gemäß Anspruch 2, gekennzeichnet durch eine Gürtellage (21-23, 221-223), welche durch Niedrig-Twist-Aramidkorde mit einer linearen Dichte von zumindest 4400 dtex (4000 denier) und einer Gewebedichte von 390 bis 710 EPM (10 bis 18 EPI) verstärkt ist, wobei die Verstärkungskorde einen Winkel zwischen 18° und 26° mit der Äquatorialebene (EP) des Reifens bilden, welche um zwei Lagen gelegt ist, die mit Niedrig-Twist-Aramidkorde verstärkt sind, die eine Gewebedichte von 390 bis 710 EPM (10 bis 18 EPI) haben und einen Winkel zwischen 14° und 22° mit der Äquatorialebene des Reifens bilden.

5. Luftreifen gemäß Anspruch 1, dadurch gekennzeichnet, daß die Karkasse mindestens zwei nach oben umgelegte bzw. hochgeschlagene Karkassenlagen (13, 14, 213, 214) und zumindest eine nach unten umgelegte Karkassenlage (15, 215) aufweist, wobei jede nach oben umgelegte Karkassenlage axial und radial nach außen um jeden Wulstkern (11, 211) gefaltet ist und jede nach unten umgelegte Karkassenlage zumindest teilweise axial nach innen um die nach oben umgelegte Karkassenlagen und dem Wulstkern gefaltet ist.

6. Luftreifen gemäß Anspruch 5, gekennzeichnet durch zumindest einen Streifen (41, 241, 242), welcher durch Nylonkorde verstärkt ist, die sich entlang der radial innersten Seite von jedem Apex bzw. Kernreiter (43, 243) und der radial äußersten nach oben umgelegten Karkassenlage (14, 214) erstrecken.

7. Luftreifen gemäß Anspruch 6, dadurch gekennzeichnet, daß die Streifen (241, 242) sich von den Wulstkernen (211) zumindest entlang der ganzen Höhe des Apex (243) hoch in die Seitenwand erstrecken.

8. Luftreifen gemäß Anspruch 6, dadurch gekennzeichnet, daß die Streifen (41) sich teilweise um die radial innerste Seite des Apex (43) und entlang der radial äußersten Seite des Apex hoch in die Seitenwand erstrecken.

9. Luftreifen gemäß Anspruch 6, dadurch gekennzeichnet, daß die Nylonkorde des Verstärkungsstreifens (41, 241) unter Winkeln von 30° bis 60° bezüglich einer den Kord schneidenden Axialebene angeordnet sind.

**10.** Luftreifen gemäß Anspruch 5, gekennzeichnet durch zumindest eine Lage (45, 46, 245, 246) einem sog. Semi-Chipper bzw. Semi-Abblätterer, welche durch Nylonkorde verstärkt ist und zwischen der radial äußersten nach unten umgelegten Karkassenlage (15, 215) und dem Wulstschutz bzw. Wulstband (44, 244) des Reifens angeordnet ist.

**11.** Luftreifen gemäß Anspruch 10, gekennzeichnet durch einen Kautschukgummistreifen (47) mit einer Shore-A-Härte von etwa 62, welcher zwischen dem Semi-Chipper (45, 46) und der nach unten umgelegten Karkassenlage (15, 215) angeordnet ist.

**12.** Luftreifen gemäß Anspruch 1, dadurch gekennzeichnet, daß die Nylon-Monofilamente eine lineare Dichte von zumindest 3300 dtex (3000 denier) und eine Gewebedichte von zumindest 390 EPM (10 EPI) aufweisen.

## Revendications

**1.** Bandage pneumatique (10, 210) pour aéroplane, possédant
- au moins deux nappes de carcasse (13-15, 213-215) repliées au moins partiellement en direction axiale autour d'une paire de tringles de talons (11, 211) séparées en direction axiale, chaque nappe de carcasse (13, 15, 213-215) comprenant plusieurs éléments de renforcement parallèles constitués de monofilaments en nylon possédant une densité linéaire d'au moins 2800 dtex (2.500 deniers) et une densité de tissu d'au moins 470 EPM (12 EPI) et ayant une section transversale oblongue, leur étendue linéaire maximale en coupe transversale, c'est-à-dire leur largeur, étant égale à deux à cinq fois l'étendue linéaire en coupe transversale perpendiculaire à ladite largeur, qui sont orientés en formant des angles de 75° à 90° par rapport au plan équatorial (EP) du bandage pneumatique; et
- deux nappes de ceinture ou plus (21-23, 221-223) disposées à l'extérieur desdites nappes de carcasse (13-15, 213-215) en direction radiale dans une région de couronne du bandage pneumatique, dans lequel les éléments de renforcement des nappes de ceinture (21-23, 221-223) sont constitués d'aramide possédant une densité linéaire d'au moins 2220 dtex (2.000 deniers) et une densité de tissu d'au moins 390 EPM (10 EPI).

**2.** Bandage pneumatique selon la revendication 1, caractérisé par des câblés d'aramide renforçant les nappes de ceinture (21-23, 221-223) possédant une densité linéaire d'au moins 3300 dtex (3.000 deniers), une densité de tissu de 390 à 980 EPM (10 à 25 EPI) et formant, avec le plan équatorial (EP) du bandage pneumatique (10, 210), un angle compris entre 10° et 35°, les angles formés par les câblés de renforcement de deux nappes voisines et le plan équatorial (EP) du bandage pneumatique étant opposés.

**3.** Bandage pneumatique selon la revendication 2, caractérisé par une nappe de ceinture (21-23, 221-223) renforcée par des câblés d'aramide soumis à une torsion élevée possédant une densité linéaire d'au moins 4400 dtex (4.000 deniers) et une densité de tissu de 470 à 790 EPM (12 à 20 EPI), les câblés de renforcement formant, avec le plan équatorial (EP) du bandage pneumatique, un angle compris entre 18° et 24°, repliée autour de deux nappes renforcées par des câblés d'aramide soumis à une torsion élevée possédant une densité de tissu de 470 à 790 EPM (12 à 20 EPI) et formant, avec le plan équatorial du bandage pneumatique, un angle compris entre 15° et 24°.

**4.** Bandage pneumatique selon la revendication 2, caractérisé par une nappe de ceinture (21-23, 221-223) renforcée par des câblés d'aramide soumis à une faible torsion, possédant une densité linéaire d'au moins 4400 dtex (4.000 deniers) et une densité de tissu de 390 à 710 EPM (10 à 18 EPI), les câblés de renforcement formant, avec le plan équatorial (EP) du bandage pneumatique, un angle compris entre 18° et 26°, repliée autour de deux nappes renforcées par des câblés d'aramide soumis à une faible torsion possédant une densité de tissu de 390 à 710 EPM (10 à 18 EPI) et formant un angle compris entre 14° et 22° avec le plan équatorial du bandage pneumatique.

**5.** Bandage pneumatique selon la revendication 1, caractérisé en ce que la carcasse possède au moins deux nappes de carcasse à retournement vers le haut (13, 14, 213, 214) et au moins une nappe de carcasse (15, 215) à retournement vers le bas, chaque nappe de carcasse à retournement vers le haut étant repliée autour de chaque tringle de talon (11, 211) vers l'extérieur en direction axiale et en direction radiale, et chaque nappe de carcasse à retournement vers le bas étant repliée au moins partiellement en direction axiale vers l'intérieur autour des nappes de carcasses à retournement vers le haut et de la tringle de talon.

6. Bandage pneumatique selon la revendication 5, caractérisé par au moins une bande (41, 241, 242) renforcée par des câblés en nylon, s'étendant le long du côté de chaque bourrage sur tringle (43, 243) le plus à l'intérieur en direction radiale et le long de la nappe de carcasse radialement la plus externe (14, 214) à retournement vers le haut.

7. Bandage pneumatique selon la revendication 6, caractérisé par le fait que ladite bande (241, 242) s'étend depuis les tringles de talons (211) au moins le long de toute la longueur du bourrage sur tringle (243) jusqu'au flanc.

8. Bandage pneumatique selon la revendication 6, caractérisé par le fait que ladite bande (41) s'étend partiellement le long du côté du bourrage sur tringle (43) le plus à l'intérieur en direction radiale et le long du côté du bourrage sur tringle le plus externe en direction radiale jusqu'au flanc.

9. Bandage pneumatique selon la revendication 6, caractérisé par des câblés en nylon de bande de renforcement (41, 241) disposés en formant des angles de 30° à 60° par rapport au plan axial coupant le câblé.

10. Bandage pneumatique selon la revendication 5, caractérisé par le fait qu'il possède au moins une nappe (45, 46, 245, 246) que l'on appelle semi-languette, renforcée par des câblés en nylon, disposée entre la nappe de carcasse radialement la plus externe (15, 215) à retournement vers le bas et la bandelette du bandage pneumatique.

11. Bandage pneumatique selon la revendication 10, caractérisé par une bande de caoutchouc-gomme (47) possédant une dureté Shore A d'environ 62, située entre la semi-languette (45, 46) et la nappe de carcasse à retournement vers le bas (15, 215).

12. Bandage pneumatique selon la revendication 1, caractérisé par des monofilaments en nylon possédant une densité linéaire d'au moins 3300 dtex (3000 deniers) et une densité de tissu d'au moins 390 EPM (10 EPI).

FIG. 1

FIG. 2

FIG. 3